Europäisches Patentamt

(19) **European Patent Office**

**Office européen des brevets**

(11) Numéro de publication: **0 193 474**

**A1**

(12) # DEMANDE DE BREVET EUROPEEN

(21) Numéro de dépôt: **86420027.4**

(22) Date de dépôt: **30.01.86**

(51) Int. Cl.⁴: **A 47 J 37/04**
**A 47 J 27/14**

(30) Priorité: **01.02.85 FR 8501861**

(43) Date de publication de la demande:
**03.09.86 Bulletin 86/36**

(84) Etats contractants désignés:
**BE CH DE FR GB IT LI NL**

(71) Demandeur: **VIVALP**
**Z.I Marigny Saint Marcel**
**F-74150 Rumilly(FR)**

(72) Inventeur: **Daniel, Jacques**
**Chemin des Granges Gruffy**
**F-74540 Alby-sur-Cheran(FR)**

(74) Mandataire: **de Beaumont, Michel**
**Cabinet Poncet B.P. 317**
**F-74008 Annecy Cédex(FR)**

(54) Dispositif pour cuisiner des aliments.

(57) Le dispositif comprend un carter (1) muni d'au moins une alvéole (4) pour recevoir un récipient (5). Le récipient repose sur un support rotatif (14) muni d'un arbre (10) incliné vers l'extérieur. Le fond de l'alvéole est déterminé par une tôle réflectrice (6). Une résistance (16) électrique entoure partiellement le récipient (5).

FIG. 2

EP 0 193 474 A1

DISPOSITIF POUR CUISINER DES ALIMENTS

La présente invention concerne un nouvel appareil destiné à la cuisson d'aliments divers, et plus particulièrement un appareil de cuisson portable pouvant être utilisé directement sur la table où les aliments cuisinés doivent être consommés.

La cuisson des aliments dans un récipient pose généralement le problème selon lequel les aliments tendent à attacher au récipient, et éventuellement à brûler. On risque alors de perdre les aliments, et, au pire, de perdre le récipient si son nettoyage devient impossible. Les recettes de cuisine enseignent à l'utilisateur de remuer les aliments de façon continuelle durant les phases à température élevée, soit à l'aide d'un instrument à main, soit à l'aide d'un appareil moteur.

On a ainsi proposé des dispositifs comportant des moyens pour entraîner en rotation une palette plongeant dans le récipient.

Une autre solution décrite dans le brevet US-A-4 301 717 consiste à enfermer le récipient dans une enceinte chauffante et à l'entraîner en rotation autour d'un axe que l'on peut incliner. Ce dispositif présente toutefois des inconvénients graves dûs à sa structure ; en effet, le récipient n'est pas amovible, de sorte que son nettoyage doit s'effectuer sur place et est incomplet ; si des aliments pénètrent entre le récipient et l'enceinte chauffante, il est impossible de les extraire et ils subissent nécessairement les effets de la haute température de l'enceinte ; par ailleurs, une résistance électrique est noyée dans l'enveloppe de l'enceinte et produit un échauffement prohibitif et dangereux de la surface extérieure de l'enceinte. Cet échauffement se propage sans difficulté au moteur et risque de l'endommager ; la structure choisie conduit nécessairement à un prix de revient très élevé, d'autant qu'il n'y a qu'un seul récipient par appareil.

La présente invention a notamment pour objet d'éviter les inconvénients des dispositifs connus, en proposant un nouvel appareil dans lequel le ou les récipients sont amovibles, rendant possibles leur nettoyage et le nettoyage des parties de l'appareil disposées sous les récipients ; les récipients sont inclinés selon une orientation constante, rendue possible par leur caractère amovible, et assurant une stabilité accrue ; on ne risque pas de renverser le récipient en cours d'usage, contrairement aux dispositifs connus mentionnés ci-dessus.

Selon un autre objet de l'invention, des moyens sont prévus pour assurer une isolation thermique et un refroidissement efficaces, notamment pour les moyens d'entraînement en rotation du récipient.

Selon un autre objet, la structure choisie selon l'invention permet de réaliser, de manière très économique, un tel appareil comprenant plusieurs récipients distincts répartis selon un pourtour les rendant accessibles simultanément à plusieurs convives, contrairement aux dispositifs connus dans lesquels on ne prévoit qu'un seul récipient. Le fait de prévoir un appareil à plusieurs récipients a nécessité de modifier et d'adapter très sensiblement les moyens de chauffage, d'entraînement et d'isolation thermique.

On constate, en particulier, que les structures connues des moyens de chauffage, d'entraînement et de protection thermique ne permettent pas de réaliser un appareil à plusieurs récipients sans multiplier inconsidérément le coût de fabrication.

Selon un autre objet, des moyens sont prévus pour assurer une excellente efficacité thermique, concentrant l'énergie calorifique sur le ou les récipients et évitant les échauffements des parois extérieures de l'appareil.

Pour atteindre ces objets ainsi que d'autres, l'appareil comprend un carter muni d'au moins une alvéole dont l'ouverture est de dimensions suffisantes pour recevoir un récipient amovible ; le fond de l'alvéole est formé par une tôle réflectrice ; une résistance électrique, associée à des moyens pour assurer sa connection à une source d'énergie électrique extérieure, comporte une portion disposée dans l'alvéole entre le récipient et la tôle réflectrice ; un support rotatif, disposé dans l'alvéole, tourne autour d'un axe incliné de direction fixe, et reçoit le récipient amovible ; l'arbre d'entraînement du support rotatif traverse une lumière de la tôle réflectrice et tourillonne dans des paliers solidaires du carter et disposés au dessous de la tôle réflectrice ; l'arbre est entraîné en rotation par un moteur électrique disposé au dessous de la tôle réflectrice.

Selon un mode de réalisation de l'invention, le carter comprend un capot supérieur amovible dont l'enlèvement assure l'accès à la tôle réflectrice pour le nettoyage.

Selon une autre caractéristique de l'invention, le carter comprend plusieurs alvéoles réparties et distinctes pour recevoir chacune un récipient amovible entraîné en rotation par un arbre incliné vers l'extérieur ; une même tôle réflectrice peut alors former le fond de plusieurs alvéoles et laisser une communication entre ces alvéoles ; une même résistance électrique peut former élément chauffant pour plusieurs alvéoles ; de préférence, la résistance électrique comporte, dans chaque alvéole, une portion recourbée et enveloppante faisant partiellement le tour de l'arbre d'entraînement.

Un avantage important d'un tel appareil à plusieurs récipients est de rendre beaucoup plus accessible la nourriture pour chaque convive : d'une part, les récipients sont moins profonds qu'un récipient unique et leur fond en est plus accessible ; d'autre part, l'inclinaison des récipients oriente leurs ouvertures vers l'extérieur en face de chacun des utilisateurs répartis autour d'une table sur laquelle repose l'appareil.

D'autres objets, caractéristiques et avantages de la présente invention ressortiront de la description suivante d'un mode de réalisation particulier, faite en relation avec les figures jointes, parmi lesquelles :

- la figure 1 représente un dispositif selon la présente invention en vue de dessus, le capot supérieur étant enlevé sur une moitié de vue ;

- la figure 2 représente une vue de côté en coupe selon l'axe I-I de la figure 1 ; et

- la figure 3 représente un autre mode de réalisation du support rotatif de récipient.

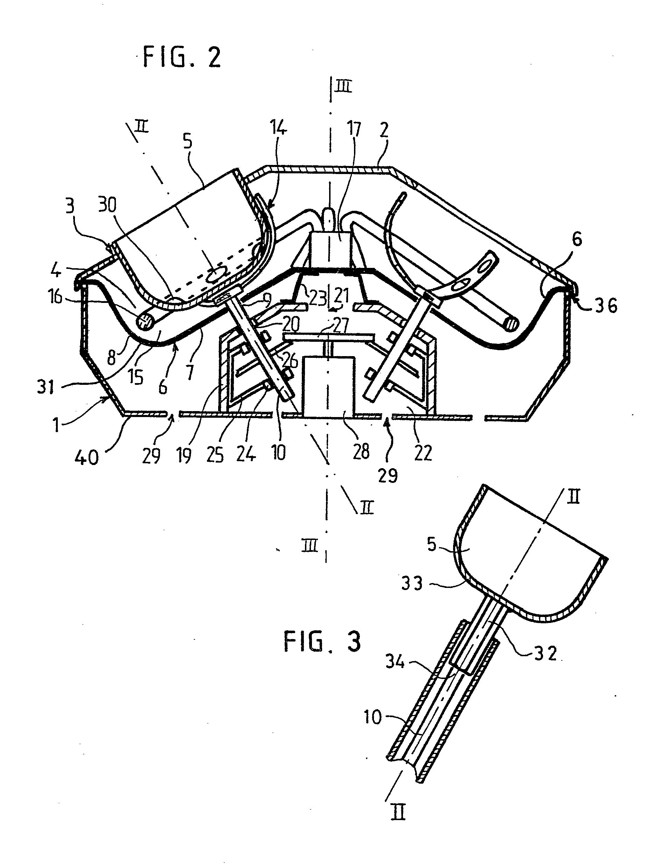

Dans le mode de réalisation représenté sur les figures, le dispositif comprend un carter 1 constitué d'une enveloppe inférieure 40 en berceau fermée à sa partie supérieure par un capot 2. Le capot 2 comprend des ouvertures telles que l'ouverture 3, réparties régulièrement selon son pourtour ; on a représenté un mode de réalisation à 4 ouvertures, mais le nombre n'est pas limitatif, et une ouverture unique pourrait suffire dans le cas d'un appareil simplifié. L'ouverture 3 donne accès à une partie interne du carter, ou alvéole 4, pour recevoir un récipient 5. Le récipient 5 a par exemple la forme d'un bol ouvert, comme le représente la figure 2, et est symétrique par rapport à un axe de symétrie II-II. On peut librement insérer un récipient 5 par l'ouverture 3 et l'en retirer. Dans la description qui suit et dans les revendications, le terme alvéole désigne une partie du carter permettant

4                              0193474

de recevoir un récipient. Les alvéoles peuvent être séparées par des parois intermédiaires évitant le refroidissement de l'ensemble des alvéoles lorsqu'un récipient est enlevé. Toutefois, dans les modes de réalisation représentés, les alvéoles forment un seul compartiment sans séparation.

Chaque alvéole comprend un fond 6 ou tôle métallique réflectrice. Sur la figure 2, on voit que la tôle réflectrice comprend une première portion centrale 7 inclinée vers la périphérie de l'appareil, et une seconde portion 8 périphérique recourbée vers le haut pour envelopper partiellement le récipient. Les autres alvéoles ayant la même structure et comportant des éléments identiques, on ne décrira ci-dessous que l'alvéole 4.

La tôle réflectrice 6 comprend une lumière 9 dans la première portion inclinée 7 pour le passage d'un arbre d'entraînement 10 sensiblement perpendiculaire à la tôle et incliné vers l'extérieur par rapport à la verticale III-III, comme le représente la figure 2. Les portions inclinées 7 et 8 de la tôle réflectrice se raccordent selon un fond annulaire 31 formant réceptacle pour les éventuels écoulements de nourriture, évitant leur écoulement par les lumières 9 d'arbre. L'inclinaison de l'arbre est choisie de façon à maintenir un récipient 5 suffisamment incliné pour obtenir un bon brassage, et sa valeur n'est pas critique ; on pourra choisir par exemple une inclinaison de 30 degrés environ.

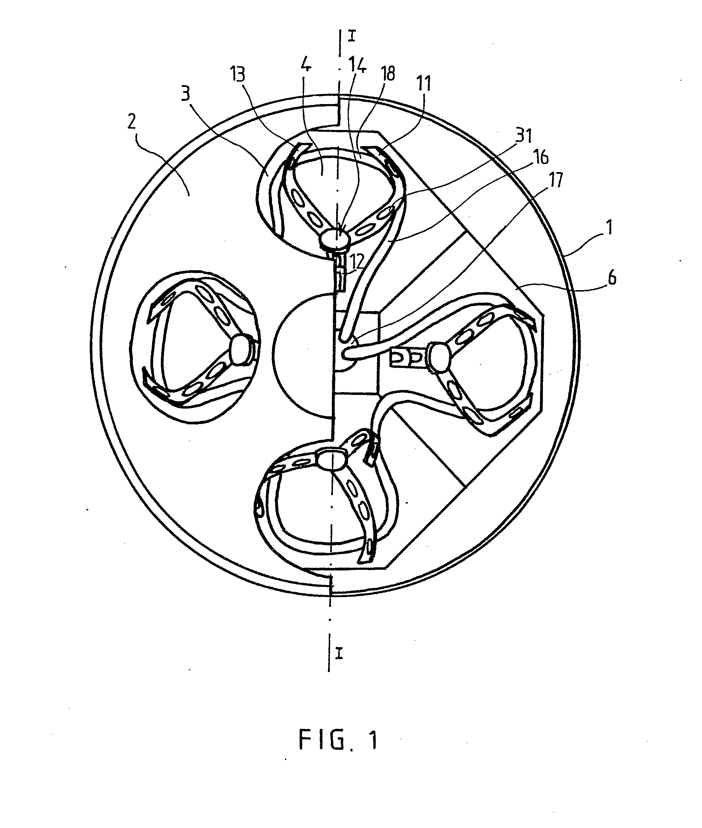

Dans le mode de réalisation des figures 1 et 2, l'arbre est solidaire, à son extrêmité supérieure, d'une structure à trois branches 11, 12 et 13 radiales formant support rotatif 14. Les branches 11, 12 et 13 sont incurvées vers le haut pour épouser la forme extérieure du récipient 5 et sont de longueur suffisante pour que le centre de gravité du récipient une fois rempli soit en permanence au dessus de la surface définie par les branches. Ainsi le récipient est correctement maintenu en position inclinée, sans risque de renversement intempestif.

Selon un mode de réalisation, les branches 11, 12 et 13 sont élastiquement déformables, et ont une forme au repos telle que le récipient, lors de son introduction, les écarte légèrement ; ainsi, les branches restent en appui élastique contre la paroi du récipient 5 et contribuent à son maintien correct. L'utilisateur en retire une impression de sécurité favorable.

Les branches du support rotatif 14 sont disposées dans l'alvéole 4 au voisinage de la tôle réflectrice 6 et à une distance suffisante de cette tôle pour définir un intervalle 15 pour le passage d'une résistance électrique 16.

Les branches 11, 12 et 13 sont réalisées en tôle métallique découpée, et sont ajourées par des lumières 31. Les lumières 31, qui sont réparties sur la surface des branches, ne compromettent pas la résistance mécanique des branches ; leur rôle est de limiter fortement la conduction thermique vers l'arbre 10 et vers les organes moteurs, tout en évitant de faire obstacle au rayonnement entre la résistance 16 et le récipient 5.

Pour des raisons d'économie, on peut choisir un mode de réalisation simplifié du support rotatif. Dans ce mode de réalisation, représenté sur la figure 3, le récipient 5 en forme de bol comprend un arbre 32 à section polygonale dépassant à l'extérieur du fond 33 selon son axe de symétrie II-II. L'arbre 10 d'entraînement comporte en bout un logement 34 axial de section polygonale complémentaire pour recevoir avec un faible jeu l'arbre 32 du récipient et former support rotatif.

La résistance 16, du type généralement utilisé dans les fours et grils électriques, comporte une embase 17 centrale assurant son support et sa connection avec une source extérieure d'énergie électrique. Sa partie tubulaire chauffante est recourbée plusieurs fois, comme le représentent les figures, pour former plusieurs branches radiales en demi-boucle, chaque demi-boucle s'insérant dans une alvéole et formant une partie 18 recourbée et enveloppante faisant partiellement le tour de l'arbre 10 entre la tôle réflectrice et la paroi inférieure du récipient 5. L'effet conjugué de cette forme particulière de résistance et de la tôle réflectrice produit un bon rendement thermique, la quasi-totalité de l'énergie calorifique étant concentrée sur le récipient 5.

La profondeur des alvéoles est choisie de façon que, lorsqu'un récipient y est introduit, les bords du récipient dépassent au dessus du capot pour permettre sa préhension.

Le carter 1 contient en outre une paroi intermédiaire protectrice 19, disposée au dessous de la tôle réflectrice 6 et séparée de celle-ci par un intervalle d'air d'épaisseur supérieure à 10 mm, de préférence 14 à 15 mm, et comportant au moins un trou 20 pour le passage de l'arbre 10. La paroi intermédiaire 19 est solidaire du carter 1 et

6 0193474

peut, comme le carter, être réalisée en matière plastique. Elle comporte une lumière centrale 21 assurant notamment la ventilation du compartiment inférieur 22 qu'elle limite. La paroi 19 porte la tôle réflectrice 6 par l'intermédiaire de pattes de liaison 23. Les pattes de liaison 23 portent l'embase 17 de résistance.

On a rassemblé dans le compartiment inférieur 22 l'ensemble des organes qu'il faut protéger de la chaleur dégagée par la résistance 16 : ainsi, l'arbre 10 tourillonne dans des paliers 24 intérieurs au compartiment 22 et portés par une pièce 25 solidaire du carter ; l'arbre 10 porte une couronne dentée 26 s'engrenant avec une couronne dentée motrice 27 centrale sollicitée par un moteur électrique 28. De préférence, les dents des couronnes dentées 26 et 27 présentent des faces à angle obtu, permettant les glissements en cas de blocage d'un récipient 5.

On organise une circulation d'air frais pour refroidir l'intérieur du compartiment inférieur 22 ainsi que l'enveloppe inférieure 40. Pour cela, outre la lumière 21, des trous 29 sont ménagés dans l'enveloppe inférieure, et des interstices 36 sont laissés dans la zone périphérique de raccordement de l'enveloppe inférieure 40 et de la tôle protectrice 6.

Le récipient 5 est réalisé de préférence en métal bon conducteur de la chaleur. Cette disposition évite les projections de graisses lors du fonctionnement. Pour certaines applications, la surface intérieure du fond du récipient peut comporter des proéminences 30 de faible dimension, par exemple des nervures ou ergots, favorisant le détachement des aliments pendant l'utilisation. Par ailleurs, on peut utilement recouvrir les faces interne et externe du récipient avec une couche de revêtement antiadhésif noir, par exemple en PTFE chargé. L'efficacité thermique est améliorée ; les aliments n'attachent pas et le brassage est amélioré.

Le fonctionnement de l'appareil est le suivant :
Les aliments à cuire, par exemple des morceaux de viande et/ou de légume, sont introduits dans les récipients par leur ouverture supérieure ; les récipients sont disposés dans les alvéoles sur leur support rotatif ; on alimente le moteur électrique 28 et la résistance chauffante 16 ; le moteur 28 entraîne les récipients 5 en rotation autour des axes fixes obliques II-II selon une vitesse lente inférieure

à la vitesse de centrifugation ; les aliments, à chaque révolution du récipient, tendent à se décrocher de la paroi du récipient ; simultanément, la résistance 16 chauffe la paroi du récipient, et les aliments sont chauffés et brassés. L'utilisateur peut les retirer à tout moment, par exemple à l'aide d'une pince ou d'une cuiller, sans couper l'alimentation électrique, et éventuellement en remettre.

La présente invention n'est pas limitée aux modes de réalisation qui ont été explicitement décrits, mais elle inclut les diverses variantes et généralisations contenues dans les revendications ci-après.

REVENDICATIONS

1 - Dispositif pour cuisiner des aliments, comportant au moins un récipient (5) pour recevoir les aliments, une ouverture dans le récipient pour introduire et enlever les aliments, des moyens pour supporter et maintenir le récipient en position inclinée, des moyens pour entraîner le récipient en rotation autour d'un axe incliné, et des moyens pour chauffer l'enveloppe du récipient, caractérisé en ce que :

- le dispositif comprend un carter (1) muni d'au moins une alvéole (4) dont l'ouverture (3) est de dimensions suffisantes pour recevoir un récipient amovible (5),

- le fond de l'alvéole est formé par une tôle réflectrice (6),

- une résistance électrique (16), associée à des moyens pour assurer sa connection à une source extérieure d'énergie électrique, comporte une portion disposée dans l'alvéole entre la tôle réflectrice et le récipient,

- l'alvéole contient en outre un support (14) rotatif destiné à supporter et entraîner en rotation le récipient (5) amovible, le support (14) étant solidaire d'un arbre (10) traversant la tôle réflectrice et tourillonnant dans des paliers (24) solidaires du carter et disposés au dessous de la tôle réflectrice, l'arbre étant entraîné en rotation par un moteur électrique (28).

2 - Dispositif selon la revendication 1, caractérisé en ce que le carter (1) comprend un capot supérieur (2) amovible assurant l'accès à la tôle réflectrice pour le nettoyage.

3 - Dispositif selon la revendication 1, caractérisé en ce qu'il comprend plusieurs alvéoles (4) pour recevoir chacune un récipient amovible entraîné en rotation par un arbre incliné vers l'extérieur.

4 - Dispositif selon la revendication 3, caractérisé en ce qu'une même tôle réflectrice forme le fond de plusieurs alvéoles, la tôle réflectrice comprenant une portion centrale (7) inclinée vers la périphérie de l'appareil et une portion (8) périphérique recourbée vers le haut, de sorte que son fond (31) forme réceptacle.

5 - Dispositif selon la revendication 3, caractérisé en ce qu'une même résistance électrique (16) forme élément chauffant de plusieurs alvéoles et comporte, dans chaque alvéole, une portion recourbée (18) et enveloppante faisant partiellement le tour de l'arbre d'entraînement (10) entre la tôle réflectrice (6) et la paroi inférieure du récipient (5).

6 - Dispositif selon la revendication 3, caractérisé en ce que chaque arbre (10) est muni d'une couronne dentée (26) s'engrenant avec une couronne dentée motrice (27) entraînée par le moteur électrique (28).

7 - Dispositif selon l'une quelconque des revendications 1 à 6, caractérisé en ce que le support mobile (14) est formé de trois branches radiales incurvées et élastiques, épousant la forme extérieure du récipient (5), et ajourées pour éviter l'échauffement thermique de l'arbre (10) et ne pas s'opposer au rayonnement de la résistance (16).

8 - Dispositif selon l'une quelconque des revendications 1 à 6, caractérisé en ce que le support mobile est constitué d'un logement axial (34) ménagé en bout d'arbre (10) et conformé pour recevoir un arbre inférieur (32) du récipient et le bloquer en rotation.

9 - Dispositif selon l'une quelconque des revendications 1 à 8, caractérisé en ce qu'il comprend une paroi intermédiaire (19), disposée dans le carter (1) au dessous de la tôle réflectrice (6) de laquelle elle est séparée par un intervalle d'air d'épaisseur supérieure à 10 mm, et comportant des trous (20) pour le passage du ou des arbres d'entraî-nement de récipient, les moyens d'entraînement en rotation (28) des arbres étant disposés au dessous de la paroi intermédiaire.

10 - Dispositif selon la revendication 9, caractérisé en ce que des passages (21, 29, 36) sont ménagés autour de la tôle réflectrice (6) et dans la paroi intermédiaire (19) ainsi que dans le fond (40) du carter pour la circulation de l'air.

11 - Dispositif selon l'une quelconque des revendications 1 à 9, caractérisé en ce que les dimensions relatives de l'alvéole (4) et du récipient (5) sont telles que, lorsque le récipient est en place dans l'alvéole, une portion du récipient dépasse hors du carter pour permettre sa préhension.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| A | US-A-4 173 925 (LEON)<br>* En entier * | 1 | A 47 J 37/04<br>A 47 J 27/14 |
| A | US-A-4 450 758 (BELINKOFF)<br>* En entier * | 1 | |
| A | US-A-4 048 473 (BURKHART)<br>* En entier * | 1 | |
| A | US-A-4 301 717 (KNEES)<br>* Colonne 3, lignes 23-28; figure 2 * | 1 | |
| A | US-A-2 722 172 (GARBO)<br>* Figure 3 * | 1 | |
| A | US-A-2 027 146 (BLY et al.)<br>* Figure 4 * | 1 | DOMAINES TECHNIQUES RECHERCHES (Int. Cl.4) |
| A | US-A-3 635 147 (LEE)<br>* Figure 2; colonne 2, lignes 40-48 * | 1 | A 47 J<br>B 01 F |

Le présent rapport de recherche a été établi pour toutes les revendications

| Lieu de la recherche<br>LA HAYE | Date d'achèvement de la recherche<br>06-05-1986 | Examinateur<br>SCHARTZ J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe a la base de l'invention
E : document de brevet anterieur, mais publié à la date de depot ou apres cette date
D : cité dans la demande
L : cité pour d'autres raisons

& : membre de la même famille, document correspondant

OEB Form 1503 03 82